# EUROPEAN PATENT SPECIFICATION

(11) **EP 4 490 030 B1**
(45) Date of publication and mention of the grant of the patent: **15.10.2025**
(21) Application number: 23712057.1
(22) Date of filing: 07.03.2023
(51) Int. Cl.: B63B 59/08, B08B 9/023, B23D 57/00, B63B 59/10, B63C 11/52, E02B 17/00, B63B 1/12

(54) **APPARATUS FOR SERVICING A STRUCTURE**
VORRICHTUNG ZUR WARTUNG EINER STRUKTUR
APPAREIL D'ENTRETIEN D'UNE STRUCTURE

(30) Priority: 07.03.2022 GB 202203134
(43) Date of publication of application: 15.01.2025
(73) Proprietor: Rototech Pte Ltd., Singapore 118518 (SG)
(72) Inventor: GUNTER, David, Swanage Dorset BH19 1AU (GB); HARTOG, Simon, Singapore 118518 (SG)
(74) Representative: Cross, James Peter Archibald
(86) International application number: PCT/GB2023/050529
(87) International publication number: WO 2023/170398

(56) References cited:
- EP-A2- 0 139 596
- WO-A1-2020/096529
- US-A- 4 705 331
- US-A1- 2014 311 748
- US-B1- 6 988 458

## Description

### Field of the Invention

The present invention relates to apparatus for servicing elongate aquatic or marine support structures such as risers, conductors, caissons, piles, or legs for marine platforms, jetties or wharves.

### Background of the Invention

Marine or other aquatic support structures typically suffer from ageing and degradation, particularly in the 'splash zone', which is the part of the structure that is periodically covered and uncovered by water, for example as a result of tidal range, wave action and/or splashing. Ageing may include corrosion and physical damage caused by wave action and impacts. Degradation may include accumulation of biological growth, such as weed, barnacles etc.

Marine or other aquatic support structures therefore need to be serviced, for example by cleaning, inspection, and coating, wrapping or painting, to ensure continued performance and to extend their life. Conventionally, servicing is carried out by divers but this can be extremely difficult and hazardous, particularly in the splash zone, and is often not fully effective.

WO-A-2020/096529 discloses apparatus for servicing a structure, comprises cage or frame that carries drive wheels or rollers from driving the frame along the structure and/or tools for servicing the structure. The frame comprises at least two parts connected together by a hinge, so that the frame can be opened to fit around the structure to be serviced, and closed to secure the frame or cage around the structure. A plurality of such frames or cages may be connected together in series around the structure.

For marine or other aquatic applications, the apparatus may need to be positioned around a structure such as a pile or leg of a jetty. The apparatus may need to be moved from one structure to another in turn. The structure to be serviced may be arranged at an angle to the vertical or horizontal, which poses particular problems in positioning the apparatus at a suitable angle for attachment to the structure.

US 6 988 458 B1 discloses a towing and washing device including a plurality of buoyant support members having a plurality of cavities formed therein and are provided with a plurality of pivotal access panels to access the cavities for removing undesirable debris from a boat hull.

EP 0 139 596 A2 discloses a device particularly suitable for cleaning and inspecting the nodes of an underwater structure having several branches.

US 4 705 331 A discloses a self-actuating clamp for attachment to a structural member in a subsea environment.

US 2014/311748 A1 discloses a remotely operated device for inspecting and/or cleaning a subsea flexible pipe joint.

WO 2020/096529 A1 discloses apparatus for servicing a structure comprising a frame for assembly around a structure.

### Statements of the Invention

Aspects of the invention are defined by the accompanying claims.

In one application, the apparatus may be used to service in turn a plurality of piles of a jetty, for example in a harbour. After each pile is serviced, the apparatus may be floated to the next pile to be serviced, and attached thereto. This provides a convenient method of moving the apparatus from one pile to the next, without the need for a crane or other lifting apparatus, which may be difficult to install in certain environments such as on a jetty in a harbour.

As well as moving the servicing apparatus from one structure to the next, it may also be necessary to adjust the angle of the apparatus so as to attach the apparatus to a structure that is not vertical, such as a batter or raker pile that is positioned at an angle to the vertical.

To address this problem, in at least some embodiments the buoyancy tank(s) may be attached to the apparatus at an angle such that when the apparatus is floating with the buoyancy tank(s) vertically above the centre of gravity of the apparatus, a longitudinal axis of the apparatus is at an angle to the vertical which preferably matches the angle of the pile. The buoyancy tank(s) may be attached to a pivot point on the apparatus, preferably around a mid-point or centre of gravity of the apparatus.

The apparatus may comprise a frame that can be opened to allow the structure to pass into the frame, and then closed around the structure. The frame may comprise at least two parts joined together by a hinge or the like. Each part may have at least one corresponding buoyancy member attached thereto, for example by a bracket which may be removable from and/or adjustable in angle relative to that part.

### Brief Description of the Drawings

Specific embodiments of the present invention will now be described with reference to the accompanying drawings, in which:
Figure 1 is a perspective view from above of an apparatus in a first example;
Figure 2 is a first side elevation of the apparatus of the first example;
Figure 3 is a second side elevation of the apparatus of the first example, orthogonal to the first side elevation;
Figure 4 is a cross-section through the plane A-A in Figure 2, indicating the position of a support structure;
Figure 5 is a top view of the apparatus of the first example;
Figure 6 is a perspective view from above of an apparatus in a second example;
Figure 7 is a perspective view from below of the apparatus of the second example;
Figure 8 is a first side elevation of the apparatus of the second example;
Figure 9 is a second side elevation of the apparatus of the second example, orthogonal to the first side elevation;
Figure 10 is a cross-section in the plane A-A in Figure 9;
Figure 11 is a cross-section in the plane B-B in Figure 9;
Figure 12 is a top view of the apparatus of the second example;
Figure 13 is a view of a kit of parts for assembly to form apparatus according to the first or second example;
Figure 14 is a diagram of the operations of an apparatus in the examples;
Figure 15 is a diagram of part of a hydraulic system of an apparatus in the examples;
Figure 16 is a diagram illustrating a remote control system for operating an apparatus in the examples;
Figure 17 is a first side elevation of an apparatus in a third example;
Figure 18 is a second side elevation of the apparatus of the third example, orthogonal to the first side elevation;
Figure 19 is a perspective view from above of the apparatus of the third example;
Figure 20 is a bottom view of the apparatus of the third example;
Figure 21 is a top view of the apparatus of the third example;
Figure 22 is a partial cross-sectional view in the plane A-A of Figure 21;
Figure 23 is a diagram showing different configurations of the apparatus of the third example as a traction module, with additional modules;
Figure 24 shows a detailed view of a connection system between modules in the configurations of Figure 23;
Figure 25 is a side elevation of an apparatus in a fourth example;
Figure 26 is a perspective view of apparatus including pivoting buoyancy tanks, according to an embodiment of the invention;
Figure 27 is a side view of the apparatus of the embodiment, showing the apparatus floating at an angle to the vertical;
Figure 28 is a perspective view of the apparatus of the embodiment, in an open position.
Figure 29 is a perspective view of the pivoting buoyancy tanks in the embodiment, separated from the apparatus;
Figure 30 is a side view of one of the pivoting buoyancy tanks; and
Figure 31 is a close-up side view of a pivoting mechanism of one of the pivoting buoyancy tanks.

### Detailed Description of Embodiments

In the description below, the orientation of the apparatus will be described as assembled around an elongate support structure 30. 'Circumferential' and 'tangential' refers to a circumference around a notional central longitudinal axis, and 'radial' to a direction perpendicular to that axis.

Where dimensions are shown in the drawings, these are given in millimetres. The dimensions are not limiting on the size of specific embodiments and are provided purely by way of example.

For clarity, not all instances of a particular part are indicated by reference numerals in the drawings. It will be understood by inspection of the drawings as a whole which parts are referred to. Similar parts between different embodiments are indicated by the same reference numeral.

An embodiment of the invention is designed for use with apparatus for servicing a structure as disclosed in WO 2020/096529, examples of which are described below. However, the present invention is not limited to use with those examples. The following examples are not according to the invention and are present for illustration purposes only.

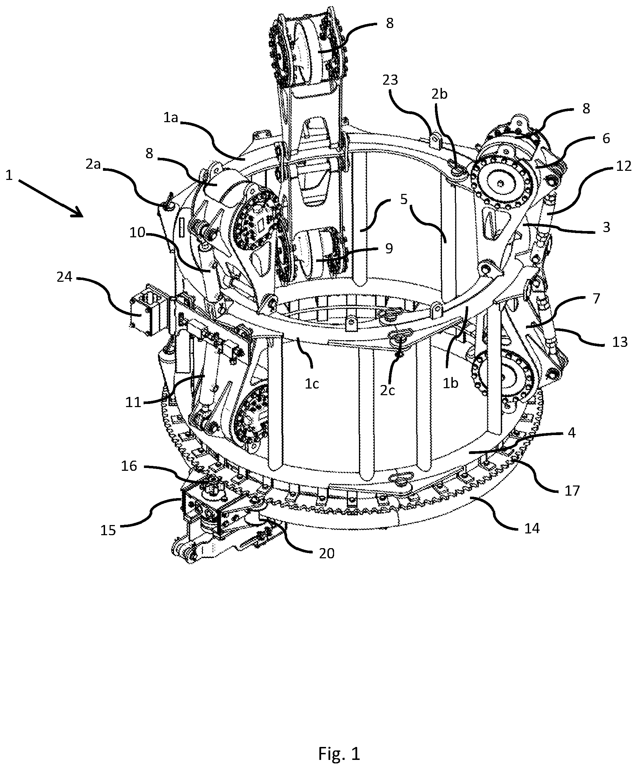

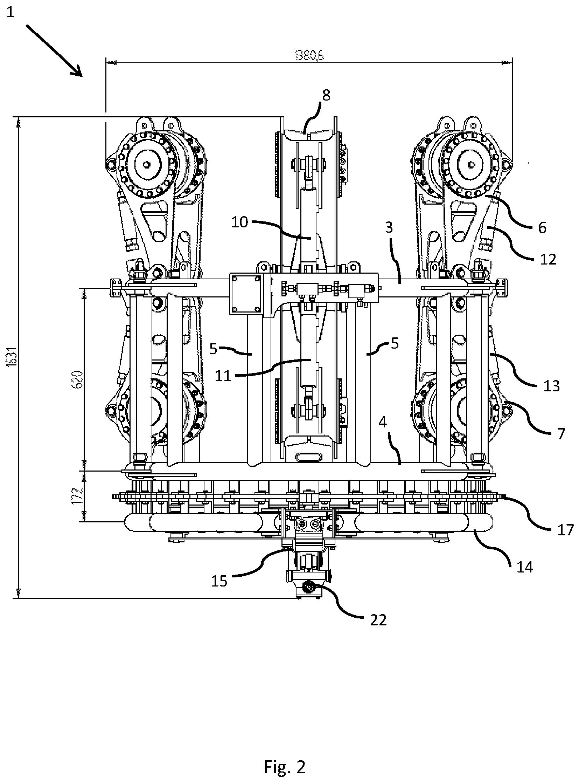

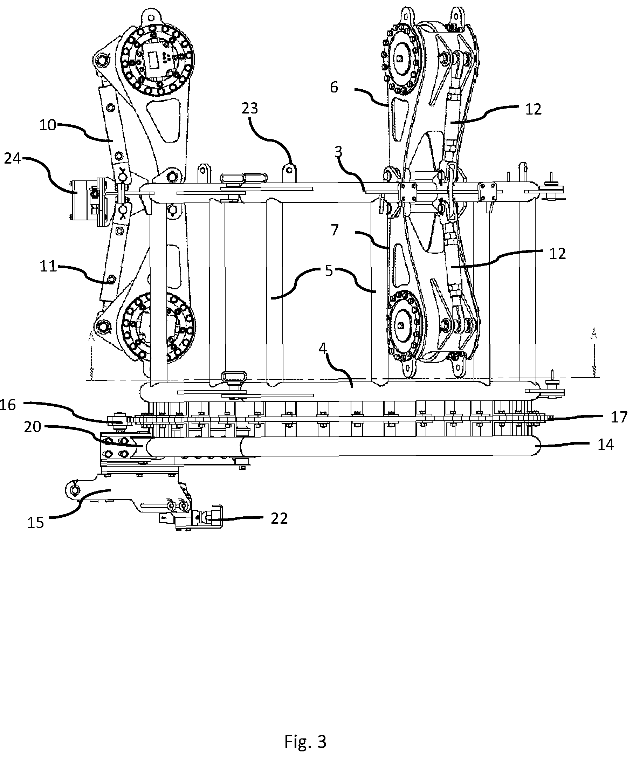

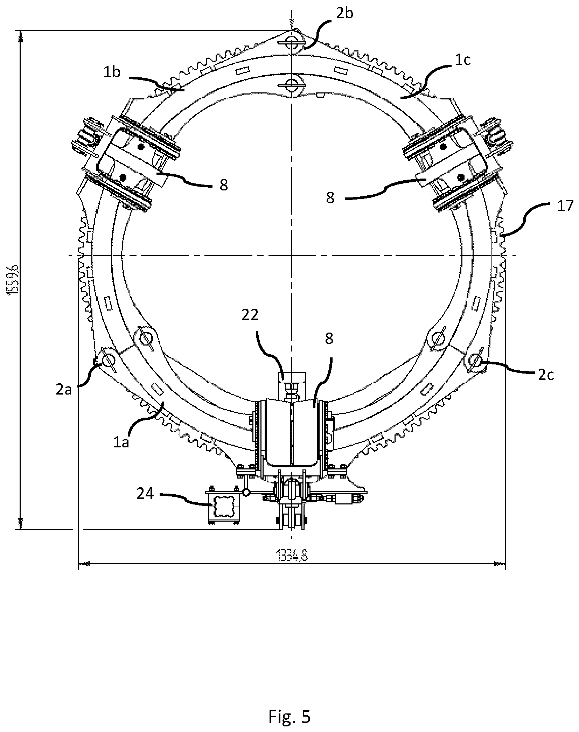

A first example is described below with reference to Figures 1 to 5. A cage or frame 1 comprises cage or frame segments or sections 1a, 1b, 1c which are removably connected together at frame connection points 2a, 2b, 2c, for example using removable pins. In use, the frame segments 1a, 1b, 1c are assembled around the support structure 30 to be serviced. The frame segments 1a, 1b, 1c include lifting points 23 for attachment of cables or the like, for lifting the frame segments 1a, 1b, 1c into position and/or for retrieving them after use. Preferably, each frame segment 1a, 1b, 1c is light enough to be manually lifted into position.

The frame 1 comprises an upper support 3 and a lower support 4, interconnected by struts 5. In this example, the upper and lower supports 3, 4 are circular in shape, and coaxial. The struts 5 extend generally vertically between the upper and lower supports 3, 4. The upper support 3, lower support 4 and struts 5 are preferably substantially rigid and are connected together so that the frame 1, when assembled, is substantially rigid.

A plurality of (in this case 3) pairs of upper and lower arms 6, 7 are connected to the upper support 3 at different circumferential positions, preferably evenly circumferentially spaced around the upper support 3, for example by 120° in this example.

Each arm 6, 7 is pivotally connected to the upper support 3 about a tangential, horizontal pivot axis, for example by means of a respective axle or spindle. In this example, the arms 6, 7 are pivotable about respective axes on the upper and lower sides of the upper support 3, but may alternatively be pivotable about the same axis. The upper and lower arms 6, 7 are pivotable in opposite directions relative to each other so that they can both simultaneously move towards the support structure 30 or away from the support structure 30. The upper and lower arms 6, 7 may be pivotable independently of each other, so that the angle between the upper and lower arms 6, 7 may vary.

Each arm 6, 7 carries a respective wheel, roller or other rotating member 8, 9 arranged to contact the support structure 30. The wheels 8, 9 may have contact surfaces arranged to enhance traction against the support structure 30 and/or to reduce wear to the wheels 8, 9. Each pair of wheels 8, 9, carried by a corresponding pair of arms 6, 7, may be mutually independently rotatable.

At least one of the pairs of arms 6, 7 are reciprocally driveable to pivot towards and away from the support structure 30 so that the corresponding wheels 8, 9 respectively clamp and release the support structure 30. Preferably, this pair of arms 6, 7 is driven by respective hydraulic cylinders 10, 11. The control of the hydraulic cylinders 10, 11 may be interconnected so that the pair of arms is driven in synchronism. The hydraulic cylinders 10, 11 may be supplied by respective hydraulic hoses (not shown), secured by a hose clamp 24.

Others of the pairs of arms 6, 7 may be adjustably held in a pivotal position, for example by adjustable length bars or bottle screws 12, 13, according to the diameter of the support structure 30 to be serviced.

The lower arms 7 are arranged to pass between the struts 5 to enable the corresponding wheels 9 to contact the support structure 30.

At least one of the wheels 8, 9 is driveable reciprocally in either one of opposite directions (e.g. forward and backward) so as to move the apparatus respectively up and down the support structure 30. Preferably, the driveable wheel(s) 8, 9 are provided on the reciprocally driveable arms 6, 7. Others of the wheels 8, 9 may not be driven, but may freely rotate, preferably independently of each other, so as to act as guides for movement of the apparatus up and down the support structure 30.

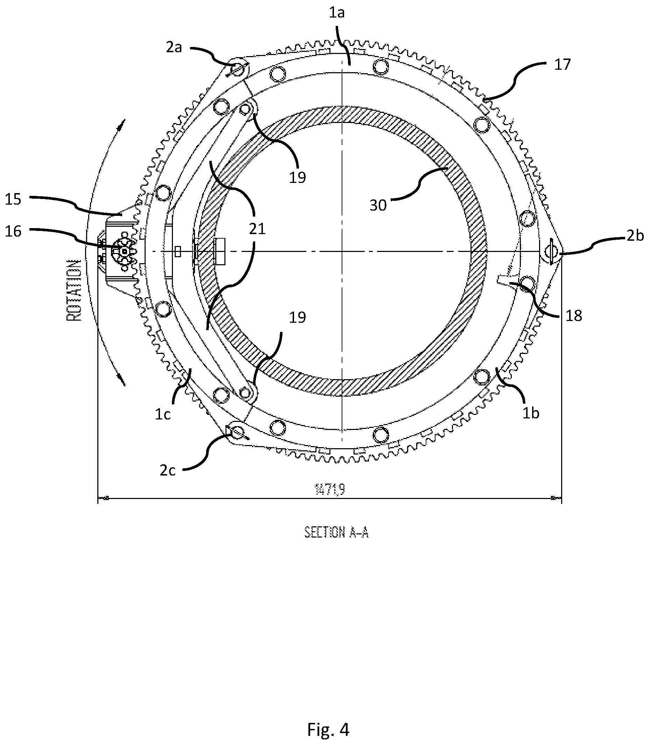

The lower support 4 supports a guide rail 14 for guiding a carriage 15 circumferentially around the lower part of the frame 1. The carriage 15 has a drive gear 16 that engages a gear track 17 arranged circumferentially and horizontally around the lower part of the frame 1. The drive gear 16 is driven so that the carriage 15 moves circumferentially around the guide rail 14. The carriage 15 may be driveable circumferentially through approximately 360°, but preferably the movement of the carriage 15 is limited to one complete rotation by a carriage stop 18 provided adjacent the guide rail 14, as shown in Figure 4.

The carriage 15 preferably does not contact the support structure 30, as accumulation on the support structure 30 could impede the progress of the carriage 15. Instead, the carriage 15 is supported by a pair of inner rollers 19 that contact an inner side of the guide rail 14, and a pair of outer rollers 20 that contact an outer side of the guide rail 14. The inner rollers 19 are mounted on respective carriage arms 21 that extend horizontally to either side of the carriage 15, for improved stability.

In an alternative example, the functions of the guide rail 14 and the gear track 17 may be combined. For example, the gear track 17 and drive gear 16 could be omitted and one or more of the inner or outer rollers 19, 20 may be driven so as the drive the carriage 15 around the guide rail 14. Alternatively, the guide rail 14 may be omitted and the gear track 17 modified so as to provide a guiding function. Instead of a gear/gear track or rack and pinion arrangement, an alternative linear drive arrangement may be used, such as a roller pinion or friction drive.

The carriage 15 is arranged to carry one or more tools 22 for servicing the support structure 30. By moving the frame 1 up and down the support structure 30 using the driveable wheel(s) 8, 9, and moving the carriage 15 circumferentially around the support structure 30, the tool(s) 22 may reach substantially any part of the external surface of the support structure 30, at least within the splash zone and subject to any restrictions due to hydraulic lines and the like.

The tool(s) 22 may be moveably mounted on the carriage 15, to allow movement of the tool(s) 22 relative to the carriage 15. For example, the tool(s) 22 may be reciprocally driveable towards and away from the support structure 30, for example in a radial direction.

Examples of the tool(s) that may be mounted either singly or together on the carriage 15, and which may be interchangeable, include:
- a high-pressure water nozzle for cleaning the surface of the support structure 30
- a wall thickness measuring probe for measuring the wall thickness of the support structure 30, for example using ultrasound
- a video camera 27 for inspection of the servicing site
- a clearance sensor for sensing clearance from the surface of the support structure
- a painting tool, such as a paint roller or brushes, for painting the surface of the support structure 30
- a wrapping tool for applying a protective wrapping to the support structure 30
- a cutting tool for cutting a part of the support structure 30, for example using high-pressure abrasive cutting.

In the second example, the carriage 15 carries a camera 27, such as a video camera, in addition to a cleaning tool 22.

The apparatus may include one or more distance sensors, to determine the distance travelled along the support structure 30. The distance sensor(s) may for example determine the number of rotations of the wheel(s) 8, 9, for example by using one or more optical or magnetic angular position sensors.

The carriage 15 may include one or more rotational position sensors (e.g. optical or magnetic sensors) able to detect an absolute or relative circumferential position of the carriage 15 relative to the frame 1, for example by detecting reference position markings on the guide rail 14 or the gear track 17.

The distance sensor(s) and/or rotational position sensors (s) may be used to determine the position of the tool 22, carriage 15 or another part of the apparatus on the support structure 30. This may allow the apparatus to travel to a predetermined absolute position or to return to a previously visited position, for example where an anomaly or discrepancy has been detected.

The apparatus may be aligned with one or more reference marks on the support structure 30, to allow the apparatus to return to a previously visited position relative to the reference marks. In one example, a horizontal and/or vertical visible mark is made on the support structure 30 corresponding to an initial position of one or more parts of the apparatus, such as the vertical position of the upper support 3 and the circumferential position of a predetermined one of the struts 5, identified for example by a marking such as a distinguishing paint marking. The distance sensor(s) is set to zero. The carriage 15 is to its maximum circumferential position (either clockwise or anti-clockwise), and the rotational position sensor(s) is set to zero. As the apparatus moves along the support structure 30, the distance sensor(s) and rotational position sensor(s) measure the distance travelled in an axial and circumferential direction relate to the initial position. This enables the position of any anomaly or discrepancy on the support structure to be mapped and returned to, if required.

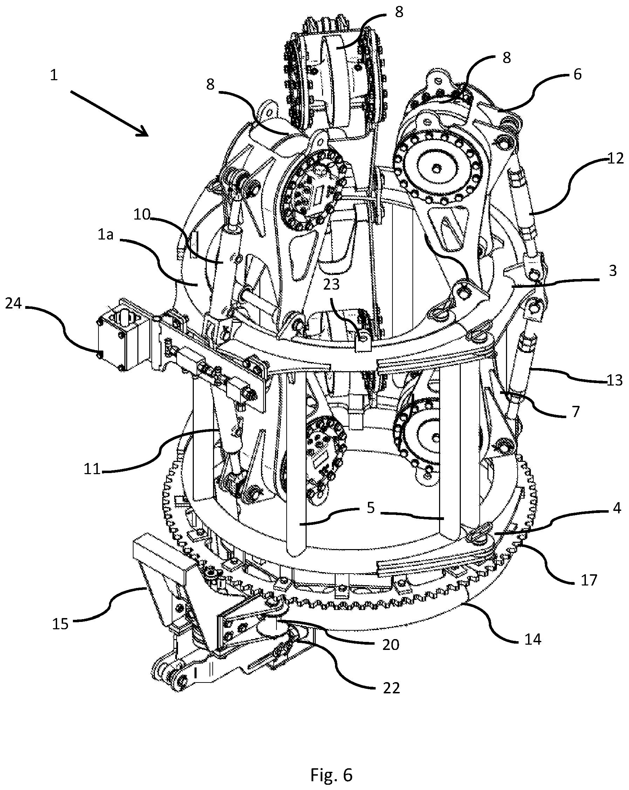

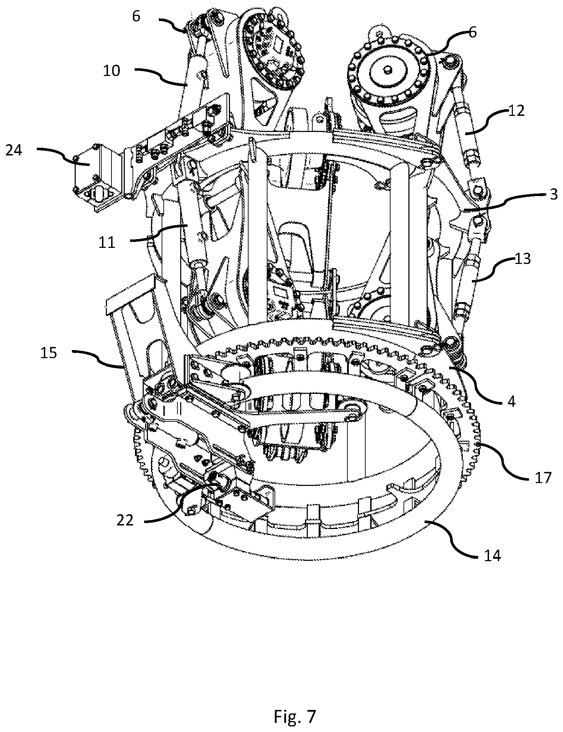

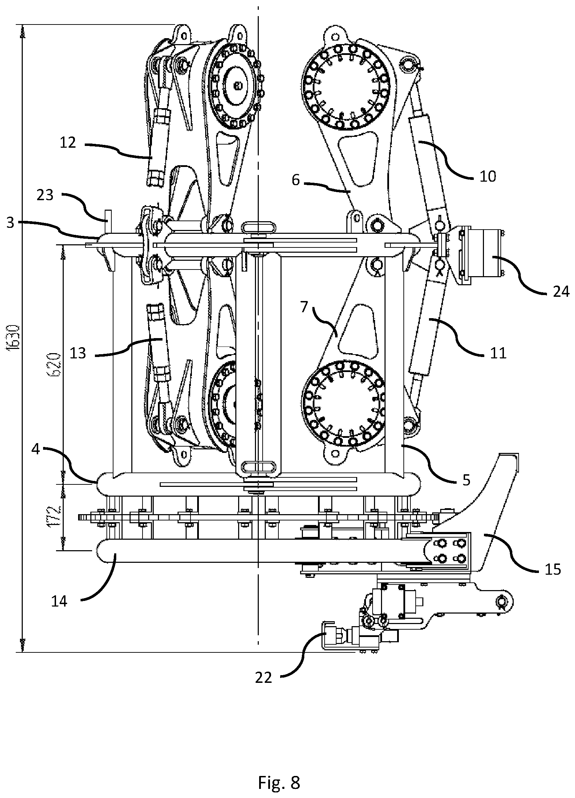

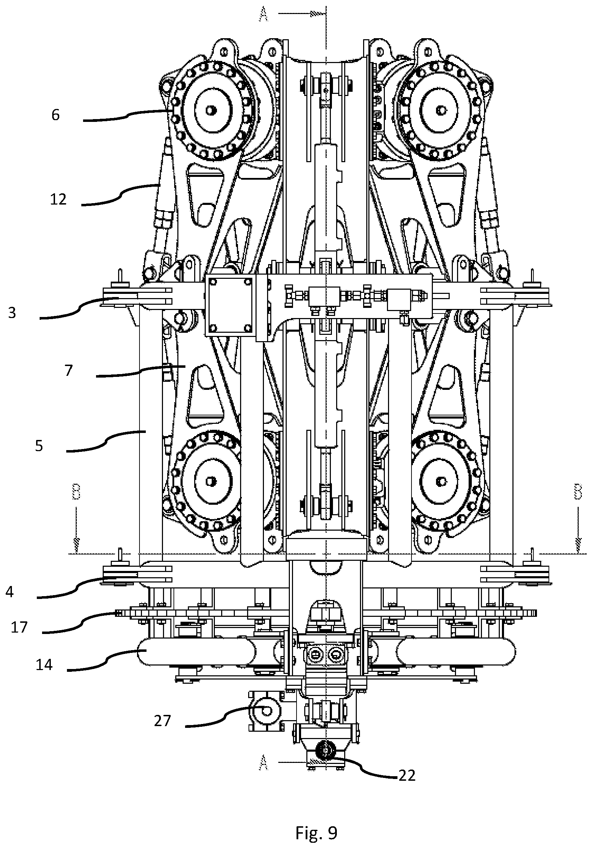

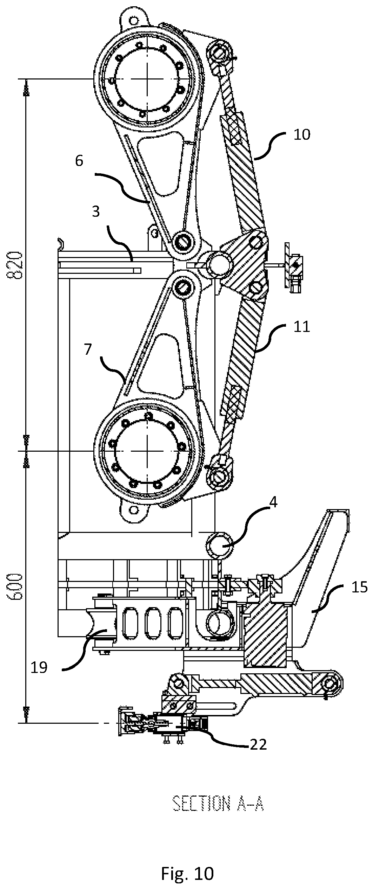

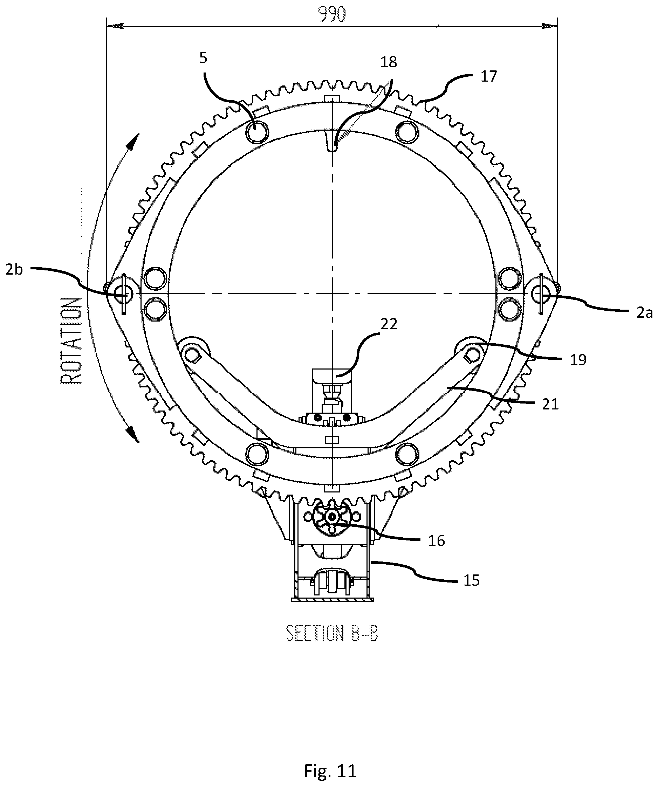

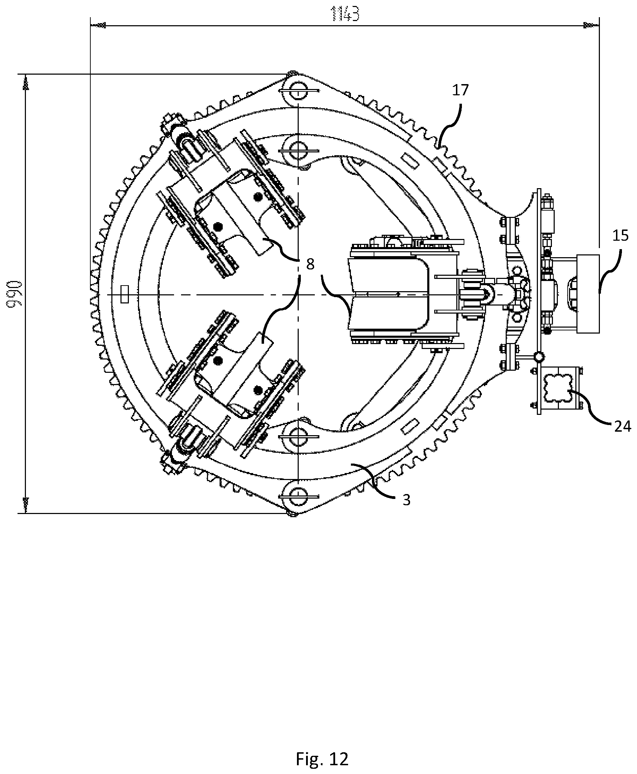

The first example is designed to service support structures 30 with a diameter in the range 22 - 36 inches (0.56-0.91 metres). Alternative examples of different sizes and/or numbers of frame segments 1a, 1b, 1c may be provided to service support structures of other diameters. For example, Figures 6 to 12 show a second example which is similar in construction to the first example but has a frame 1 of smaller diameter designed to service a support structure 30 with a diameter in the range 9% - 22 inches (0.24 - 0.56 metres). The frame 1 comprises two frame segments 1a, 1b, which are semi-cylindrical and are assembled together to form a cylindrical frame 1.

The second example has three pairs of upper and lower arms 6, 7 as in the first example, evenly spaced around the upper support 3. In other examples, particularly those designed for servicing support structures of larger diameter, there may be more than three pairs of arms 6, 7.

The arms 6, 7, together with the wheels 8, 9, hydraulic cylinders 10, 11 and adjustable length bars 12, 13, may be removably attached to the frame segments 1a, 1b, 1c. These components may then be interchangeably used with the frame segments 1a, 1b, 1c of the first example and the frame segments 1a, 1b of the second example. Different carriages 15 may be required for the first and second examples, due to the different radius of curvature. Alternatively, a single adjustable carriage 15 may be interchangeably used between the first and second examples, for example with adjustable carriage arms 21.

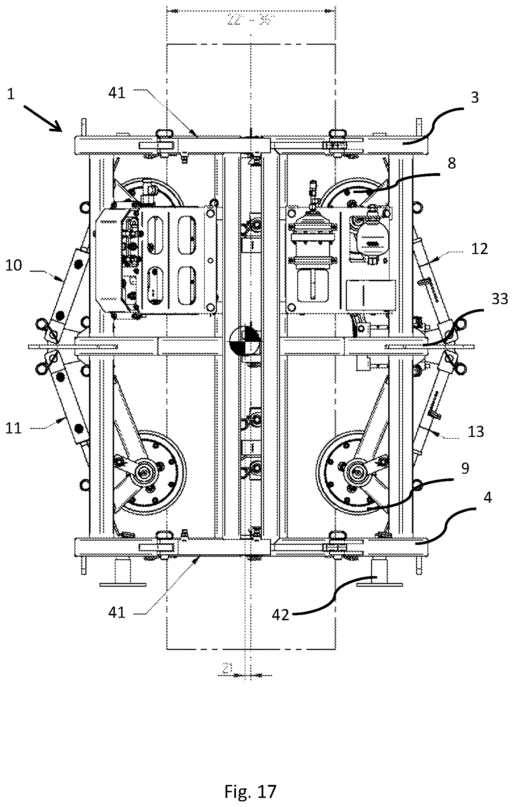

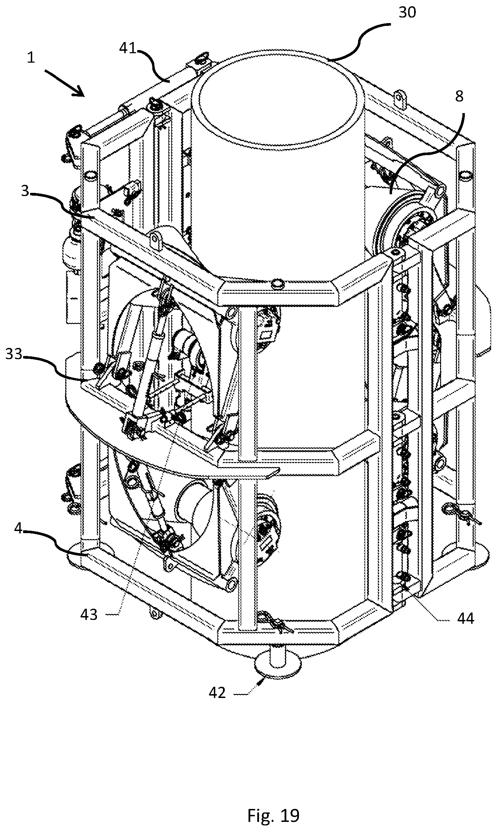

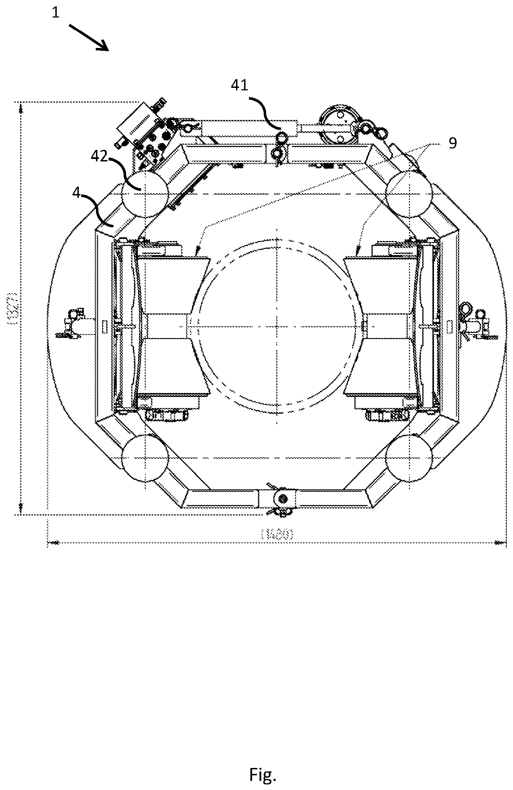

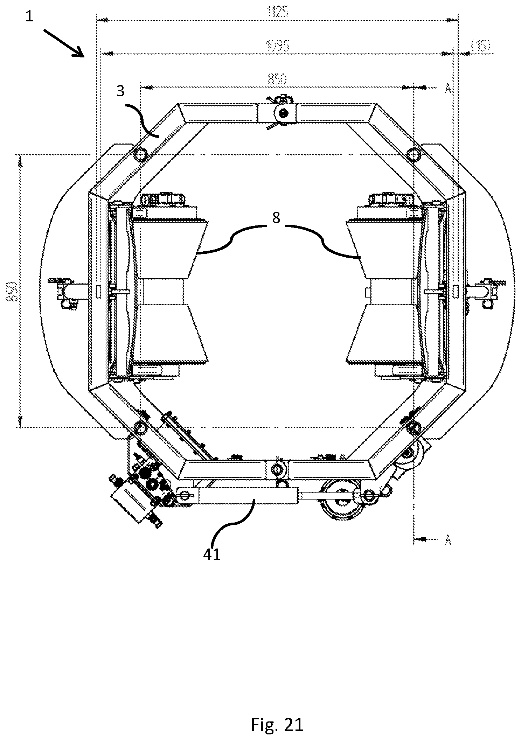

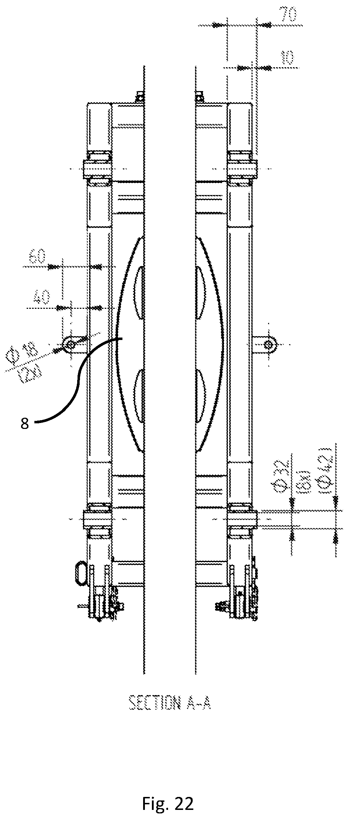

Figures 17 to 22 show an apparatus in a third example, which differs from the first and second examples in that the cage or frame 1 includes a middle support 33 to which two pairs of upper and lower arms 6, 7, carrying corresponding wheels 8, 9, are connected. Hence, the cage 1 comprises three annular horizontal pieces (lower support 3, middle support 33 and upper support 4) connected together by vertically extending struts 5 to form a generally cylindrical structure. Hence, the third example can be thought of as a development of the first and second examples in which the middle support 33 performs a similar function to the upper support 4 of the first and second examples, and the upper support 4 of the third example is an additional structural part that extends beyond the upper arms 6.

The cage 1 comprises two semi-cylindrical sections 1a, 1b hingedly connected together at connection points 2a, 2b, and lockable together, similarly to the second example. The cage in this example may designed in a larger version for fitting around structures 30 with a diameter of between 22 and 36 inches (0.56 - 0.91 m), or in a smaller version for structures 30 with a diameter of between 8 and 22 inches (0.20-0.56 m).

One pair of arms 6, 7 has a corresponding pair of actuating cylinders 10, 11, while the other pair of arms has a corresponding pair of adjustable length bars 12, 13. The wheels 8, 9 of at least one pair of arms 6, 7 are reciprocally drivable to as to move the apparatus up and down the structure 30.

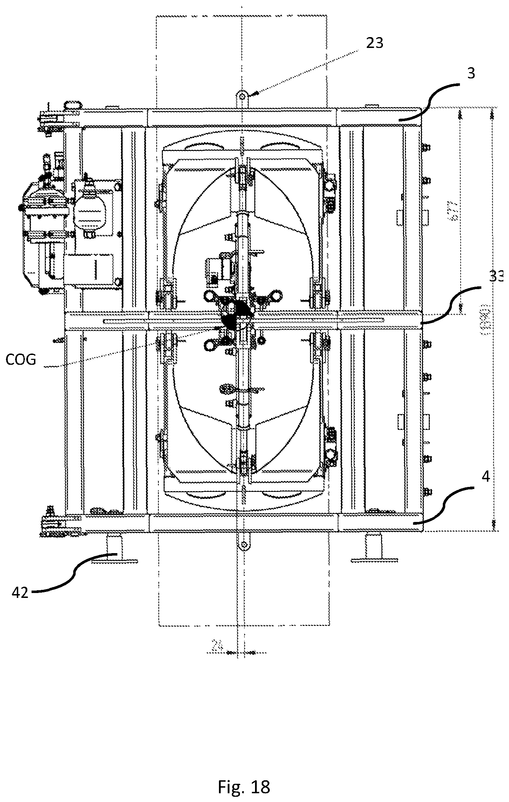

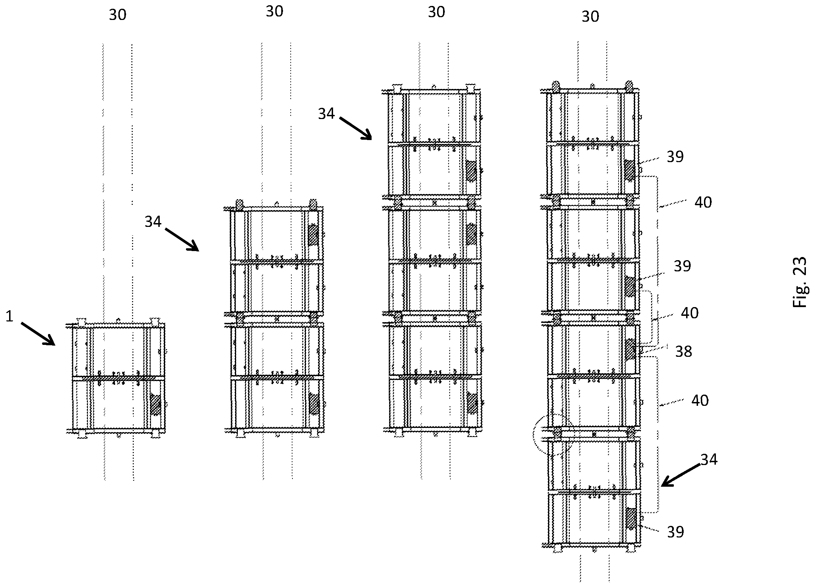

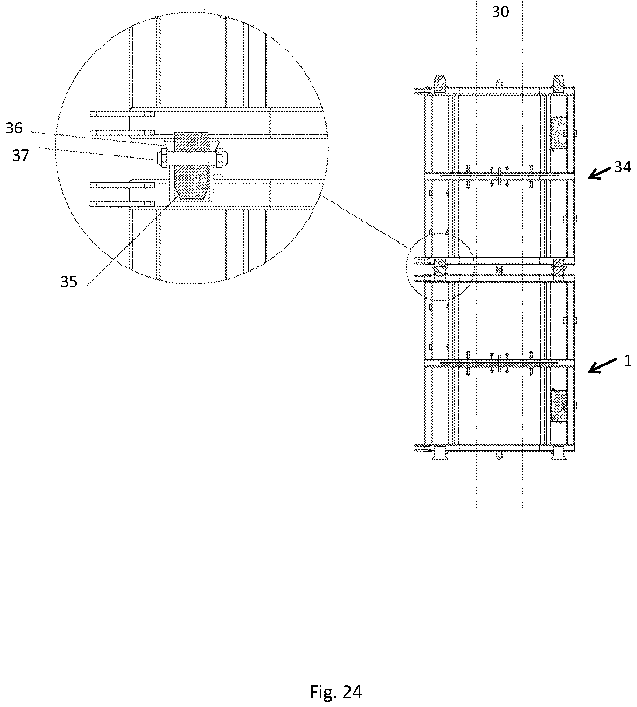

In this example, the apparatus has no guide rail 14 or carriage 15 for carrying tools 22. Hence, the centre of gravity (COG) is close to the geometric centre of the cage 1, as shown in Figures 17 and 18. As shown in Figures 23 and 24, the apparatus is configured as a traction module for connection in series along and around the structure 30 to one or more servicing modules 34, such as a cleaning module, NDT (non-destructive testing) module and/or cutting module. Each additional module comprises a cage or frame of similar construction to that of the traction module, and may comprise two or more pairs of arms 6, 7 with corresponding wheels 8, 9 similar to that of the traction module, except that none of the wheels 8, 9 of the additional module are driveable; instead the servicing modules 34 are driven along the structure 30 by the traction module. Alternatively, the one or more servicing modules may be moved along the structure 30 by some other means, such as one or more winches attached to the structure 30 or to a platform.

The distance travelled along the structure 30 may be measured by a measuring wheel 43 that is supported by the frame 1, for example by middle support 33, and is pivotable into contact with the structure 30. The measuring wheel may be an encoding wheel from which the distance travelled may be detected optically and/or electronically.

As shown in Figure 24, adjacent first and second modules may be connected together by one or more first docking parts on a first module that docks with a corresponding one or more second docking parts of the second module; for example, the first docking part(s) may comprise one or more male docking probes 35 and the second docking part(s) may comprise one or more receptacle(s) 36 into which the corresponding male docking probe(s) 35 fit. The connection may be secured by a locking system such as a quick release bolt 37 that passes through apertures in the male docking probe and the receptacle. Alternative docking and/or securing mechanisms may be used.

The traction module may have a plurality of feet 42 attached to the lower support 4. Preferably, the feet 42 are removable to allow connection of an additional module below the traction module.

The traction module includes a master controller 38 that is removably connectible by leads 40 to one or more corresponding slave controllers 39 on the one or more additional modules. The master controller 38 is controlled from the surface by the remote control unit 25, and passes communication signals and/or electrical power to the slave controllers 39.

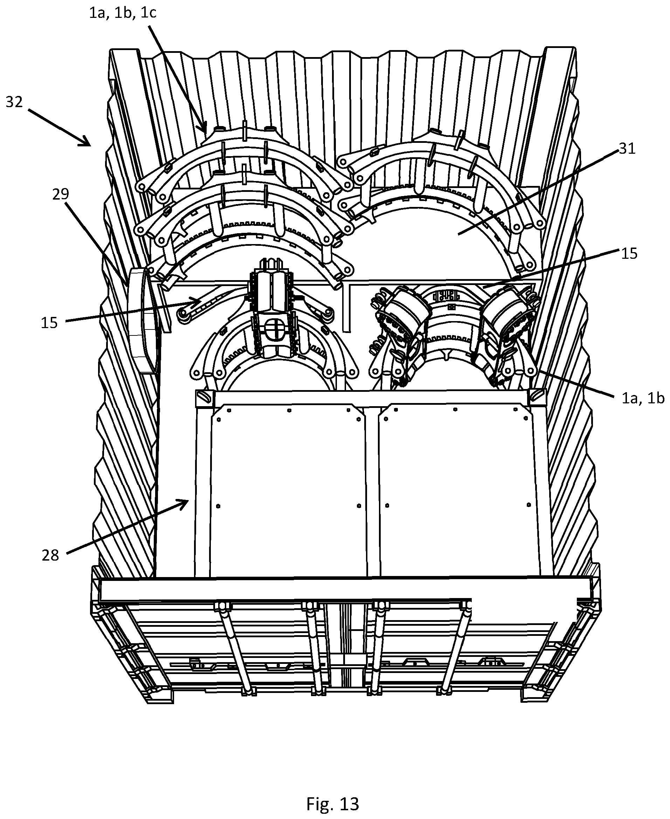

The components of any of the examples may be provided as a kit of parts. For example, Figure 13 shows a kit of parts that may be provided to allow apparatus of either the first or second example to be assembled, comprising at least the frame segments 1a, 1b, 1c of the first example, the frame segments 1a, 1b of the second example, the arms 6, 7, together with the wheels 8, 9, hydraulic cylinders 10, 11 and adjustable length bars 12, 13 (shown here attached to the frame segments 1a, 1b of the second example), carriages 15 for the first and second examples, a set of hydraulic hoses 29, and a hydraulic power supply 28. In this example, the kit of parts is provided in a transportable container 32 including a workbench 31, to facilitate partial assembly of the apparatus before assembly around the support structure 30.

In examples designed for support structures 30 of only one diameter, or a small range of diameters, some of the non-driven pairs of arms 6, 7 and wheels 8, 9 may be replaced by other types of guides, such as rollers or wheels of fixed radial position.

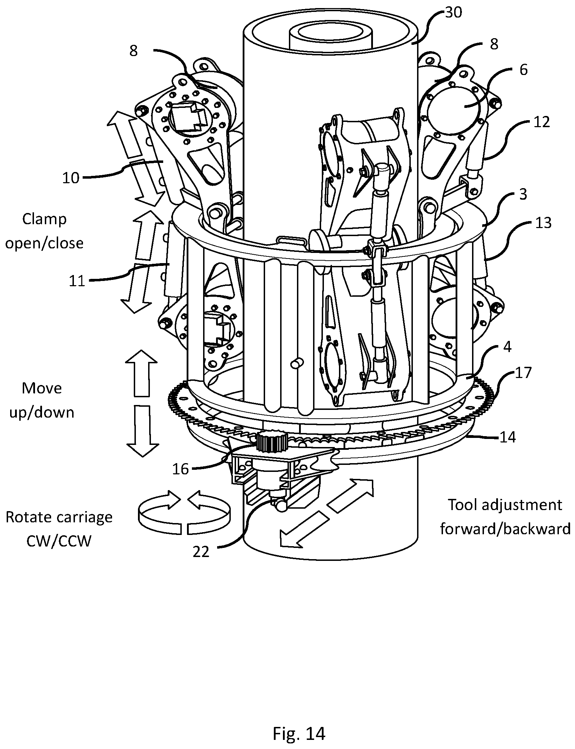

Figure 14 shows examples of driveable functions of the apparatus such as the examples as described above:
i. Clamp open/close, by driving the drivable pivotable upper and lower arms 6, 7 so as to pivot radially outwards/inwards respectively;
ii. Move up/down, by driving the drivable wheel(s) 8, 9 in contact with the surface of the support structure 30 in forward/reverse directions respectively;
iii. Rotate carriage clockwise/anticlockwise, by driving the drive gear 16 in forward/reverse direction respectively;
iv. Tool adjustment forward/backward, by driving the tool 22 radially forward/backward respectively, with respect to the carriage 15.

The driveable functions may be each be powered and/or controlled by hydraulic or electric power, for example by hydraulic hoses and/or electrical cables connected to the apparatus. Hydraulic power is preferable for at least some applications, for example in order to reduce the weight of the apparatus and/or to avoid the use of electricity in a marine environment. A hydraulic power unit may be mounted on a platform and connected to the apparatus by flexible hydraulic hoses.

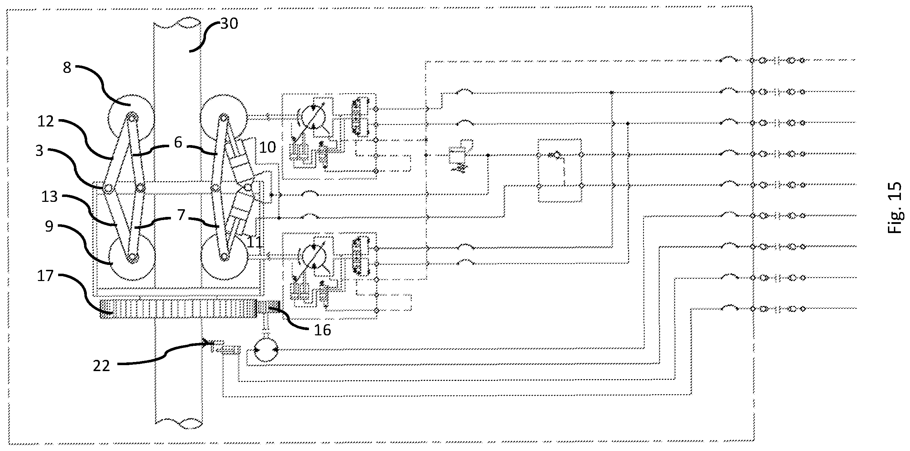

An example of a hydraulic drive system for the apparatus is shown in Figure 15, in which the pivoting of one of the pairs of arms 6, 7, the rotation of the corresponding wheels 8, 9, and in the case of the first and second examples, the rotation of the drive gear 16, and the reciprocal driving of the tool 22 are driven by separate hydraulic lines, connected to a hydraulic power unit (not shown).

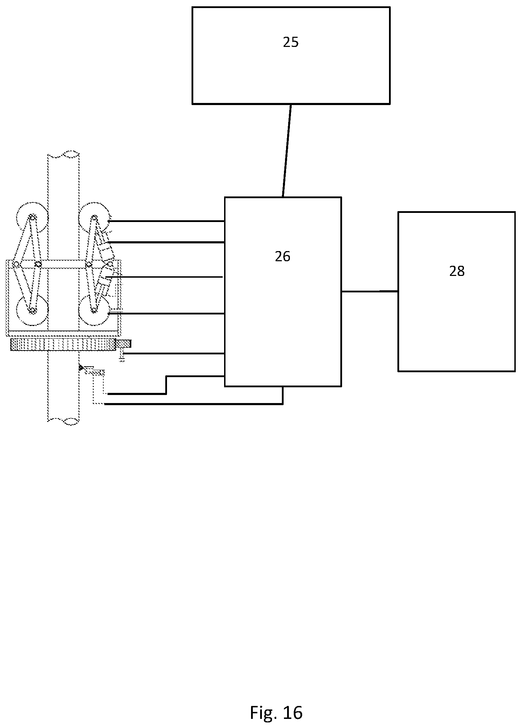

The apparatus is preferably controlled by a remote control unit 25, as shown for example in Figure 16, which allows control of some or all of the functions described above, preferably by means of corresponding user actuable controls. The remote control unit 25 may be connected by a wired or wireless connection to a controller 26 of the functions described above. Power for driving the functions may be provided by a power supply 28, under the control of the controller 26.

Preferably, the drive speeds of the wheels 8, 9 and of the drive gear 16 are controllable independently to adjust for the servicing required. Alternatively or additionally, the remote control unit 25 or controller 26 may be programmable or programmed to carry out a particular service by coordinated control of the different functions, optionally in response to the distance travelled as detected by the distance sensor(s), and/or the circumferential position of the carriage 15 as detected by the circumferential position sensor(s). This may enable a predetermined section of the support structure 30 to be serviced.

The pivot angle of the arms 6, 7 may be varied during use, for example to allow the apparatus to be driven up or down a sloping or curved support member.

The number of wheels 8, 9 that are powered may be varied according to the load to be carried by the apparatus or the operating conditions of the apparatus. The pivoting of more than one of the pairs of arms 6, 7 may be powered, depending on the adjustability or clamping force required.

Examples may be used for servicing tapering support structures, by varying the degree of pivoting of the arms 6, 7 to adjust for varying diameter as the apparatus moves up and down the support structure.

In an alternative example, the arms 6, 7 may be mounted on the lower support 4 and the guide rail 14 may be mounted on the upper support 3.

Preferably, the frame segments 1a, 1b, 1c are constructed of aluminium tube so as to be lightweight. For example, the mass of the apparatus, excluding hydraulic or electrical lines, may be in the range 200-300 kg.

For larger examples, the method of closure by removable pins may be replaced by a hydraulic closure method, in which two or more of the cage or frame segments 1a, 1b, 1c are connected together with hinged connections, actuated for example by hydraulic rams or cylinders 41, as shown for example in Figure 17. The segments 1a, 1b, 1c may be connected together on a suitable surface such as a floating pontoon or barge, supported for example by the feet 42. The hinged connections may be opened such that the cage or frame 1 fits around the support structure 30 to be serviced, then closed so as to secure the frame 1 around the structure 30. The segments 1a, 1b, 1c may be secured together by one or more locking mechanisms, such as locking cylinders 44, which may be hydraulicly actuated.

The above examples are designed for servicing a circular cylindrical support structure 30 such as a pile, and therefore the frame 1 is approximately circular cylindrical, having an inner diameter slightly larger than the diameter of the support structure 30. Alternative examples may have alternative shapes and sizes to match the type of support structure 30 which they are designed to service. For example, a square or rectangular cylindrical frame 1, preferably with a pair of arms 5, 6 on each of the four sides, may be used in an example designed for servicing a square or rectangular cylindrical support structure 30.

The above examples may be used in a marine or aquatic splash zone, or at a shallow depth below the surface, such as 10 metres. The examples may be modified for operation below 10 metres in depth, for example by the use of suitable hydraulic seals. The examples may be used for servicing pipes, to the extent that they are not impeded by the support of the pipes.

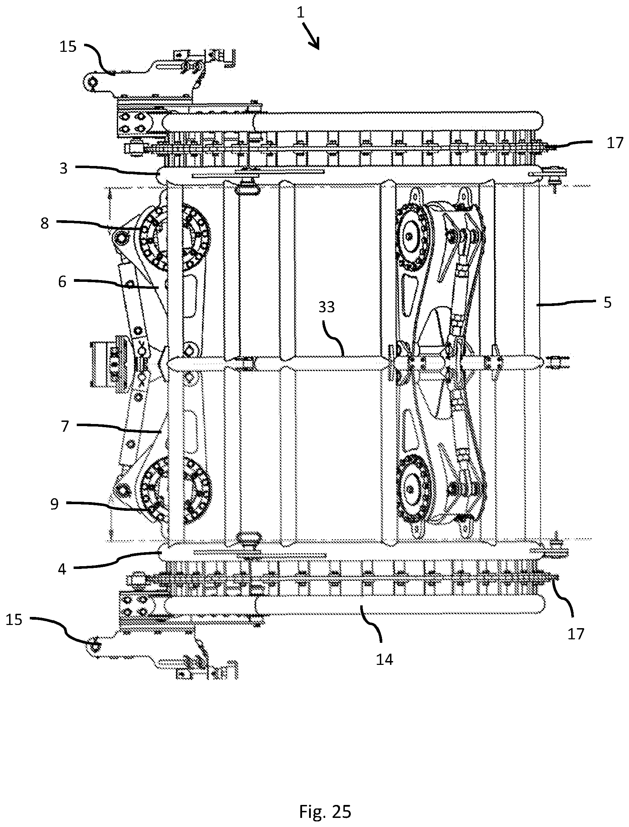

Figure 25 shows apparatus in a fourth example. This example has a frame 1 with upper and lower supports 3, 4 and a middle support 33 on which upper and lower arms 6, 7 carrying respective wheels 8, 9 as in the third example. The upper and lower arms 6, 7 are positioned between adjacent struts 5 and pass between the struts 5 so that the wheels 8, 9 can contact the structure.

As in the third example, the mounting of the upper and lower arms 6, 7 on the middle support leaves the upper and lower supports 3, 4 clear. This enables a guide rail 14 and gear track 17 carrying a tool carriage 15, similar to those of the first and second examples, to be mounted on each of the upper and lower supports 3, 4. This arrangement increases the capacity of the apparatus to carry tools on a single module.

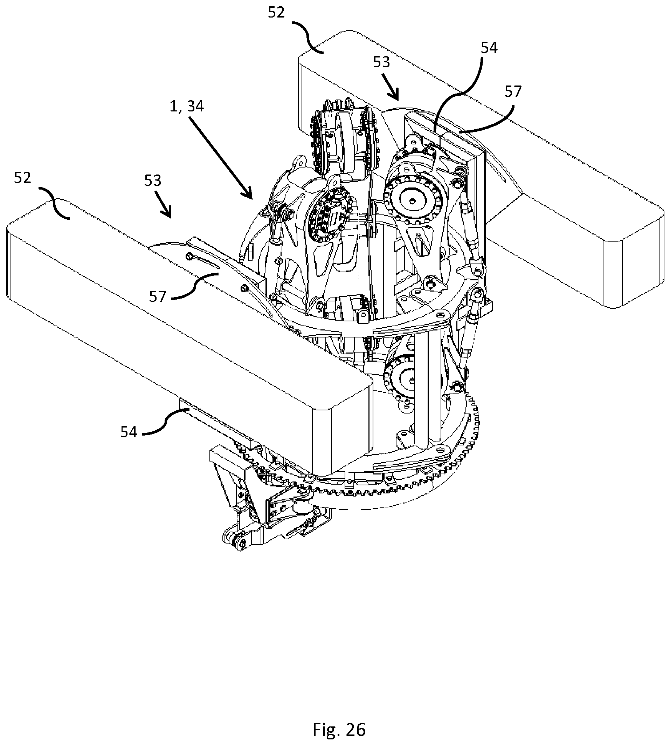

An embodiment of the present invention will now be described with reference to Figures 26 to 31, which show in outline a module as described above, such as a traction module or a service module, wherein the frame 1 has a plurality of buoyancy members 52 attached thereto by means of respective connectors 53.

The buoyancy members 52 may comprise floats and/or hollow chambers containing a gas such as air. The buoyancy of the buoyancy members 52 may be adjusted or selected so that the overall buoyancy of the apparatus is positive when floating in seawater or fresh water, depending on the desired application. The buoyancy of the chambers may be adjusted by admitting or expelling water. The buoyancy of the floats may be adjusted by adding or removing individual float sections.

The buoyancy members 52 are preferably elongate in a generally horizontal direction so as to stabilise the apparatus when floating in the water. In this embodiment, the buoyancy chambers are cuboidal, but other shapes may be used depending on the shape and configuration of the frame 1.

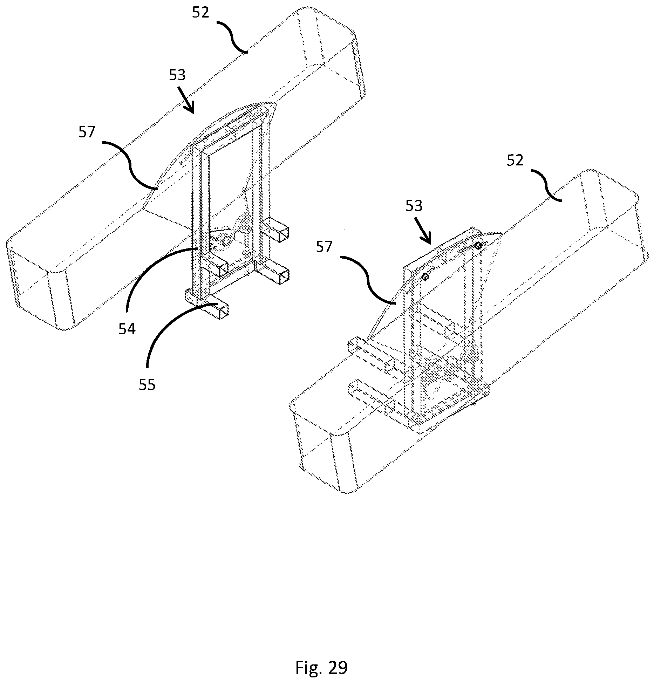

The connectors 53 are adjustable so as to adjust the angle of the frame 1 when floating in water. For example, the connectors may be pivoting connectors 53 which allow the angle of the longitudinal axis of the frame 1 to be adjusted relative to the gravitational vertical. As best shown in Figure 29, each pivoting connector 53 comprises a connector frame 54 for attachment to a respective part of the frame 1, the connector frame 54 being spaced apart from, and connected the frame 1 by a plurality of legs 55, the ends of which are attached to the frame 1, either removably (for example by pins), or permanently (for example by welding).

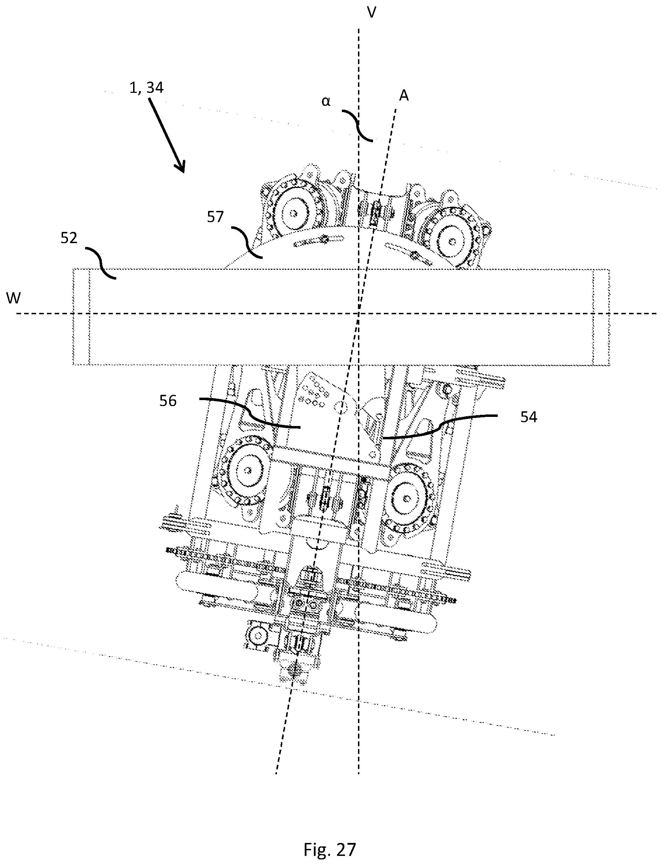

Each connector frame 54 has mounted thereon a pivot mount 56, to which is pivotally attached a pivot plate 57 at a pivot point 58, such that the pivot plate 57 may pivot about a horizontal axis i.e. a radial axis perpendicular to the longitudinal axis of the frame 1. The buoyancy chamber 52 is attached to the pivot plate 57. The pivot point 58 is arranged at, or close to a midpoint or centre of gravity of the frame 1. As shown in Figure 27, this pivot arrangement allows the angle α of the longitudinal axis A of the frame 1 to be adjusted relative to the gravitational vertical V when the apparatus is floating in water (represented here by horizontal waterline W).

A variable length connector may be connected between the pivot mount 56 and the pivot plate 57 so as to adjust the pivot angle therebetween.

The buoyancy members may be connected together by a connector that allows the two parts to move relative to one another.

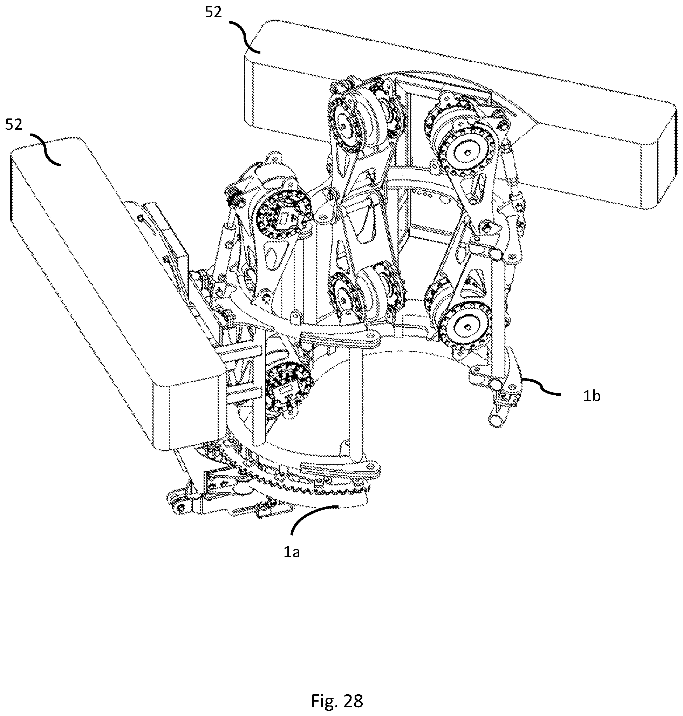

As shown in Figure 28, the frame 1 comprises two semi-cylindrical sections 1a, 1b hingedly connected together so that the frame 1 may be opened and closed to allow arrangement around the structure to be serviced. Each section 1a, 1b has a respective buoyancy chamber 52 attached thereto by a corresponding pivoting connector 53, arranged so that the buoyancy chambers 52 do not impede the opening and closing of the frame 1. For added strength, the buoyancy chambers 52 may be connected together directly, as well as through the sections 1a, 1b, by a hinge or flexible connection at the side of the frame 1 at which the sections 1a, 1b are hinged together.

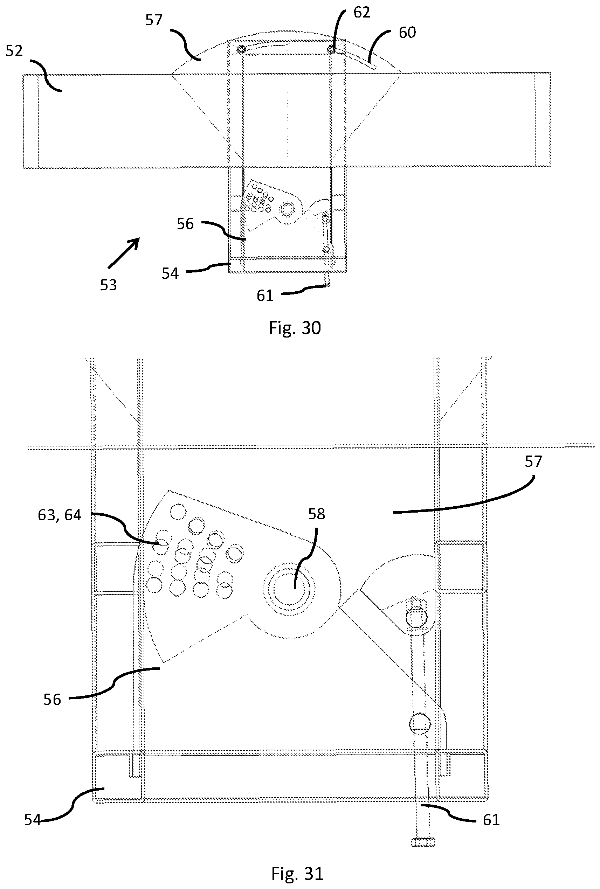

The configuration of the pivoting connector 53 is shown in more detail in Figures 30 and 31. The pivot angle between the pivot plate 57 and the pivot mount 56 is adjusted by a bolt 61 attached between the pivot mount 56 and a lower part of the pivot plate 57. Alternative means for adjusting the pivot angle include a bottle screw, a hydraulic ram or an electric motor driving a suitable gear arrangement, such as a rack and pinion gear. The adjustment may be made remotely, for example by remote control of the hydraulic ram or electric motor.

The connector frame 54 may have horizontally extending pins or bolts 62 attached thereto, which slide along corresponding slots 60 in an upper part of the pivot plate 57. The slots 60 are curved with a radius corresponding to the pivot point 58. The distal ends of the pins or bolts 62 may carry heads or nuts which can be tightened to clamp the pivot plate 57 against the connector frame at the desired pivot angle. This mechanism adds stiffness to the pivoting connector and helps to secure the buoyancy chamber at the desired pivot angle.

An array of holes 63, 64 are formed respectively in the pivot mount 56 and the pivot plate 57, in a 'hit and miss' arrangement such that selected ones of the holes 63, 64 align with each other at predetermined angular increments. A pin or bolt may be inserted through a pair of aligned holes 63, 64 so as to secure the pivot mount 56 and pivot plate 57 at the desired pivot angle. The positioning of the holes 63, 64 may be defined to allow very small angular increments between different pivot angles at which pairs of the holes 63, 64 align.

As an alternative to the pivoting connectors, the buoyancy members 52 may be connected to the frame 1 by another means that allows adjustment of the angle of the frame when floating. For example, a first buoyancy chamber 52 may be attached to an upper end of the frame 1 and a second buoyancy chamber 52 may be attached to a lower end of the frame at the hinged side, with a variable length tether. However, the pivoting connector(s) provide a particularly compact and practical solution.

Alternative embodiments of the invention, which may be apparent to the skilled person on reading the above description, may fall within the scope of the invention as defined by the accompanying claims.

## Claims

1. Apparatus for servicing an elongate aquatic structure (30), comprising a frame (1) for attachment to the structure (30) and configured for servicing the structure (30) and/or transport along the structure (30), wherein the frame (1) comprises at least two parts (1a, 1b) moveable relative to one another so as to open and close the frame (1) for arrangement around the structure (30), each of the parts (1a, 1b) having a corresponding buoyancy member (52) attached thereto by a respective connector (53) that is adjustable such that an angle of a longitudinal axis of the frame (1) when floating in water may be adjusted relative to the vertical to match an angle of the elongate aquatic structure (30) to which the apparatus is to be attached, so that the frame (1) is arranged to fit around the structure (30) while the apparatus is floating.

2. Apparatus of claim 1, wherein each connector (53) is a pivotal connector.

3. Apparatus of claim 2, wherein each pivotal connector (53) has a pivot point (58) around a mid-point or centre of gravity of the frame (1).

4. Apparatus of any preceding claim, wherein the buoyancy members (52) are removably attached to the respective parts of the frame (1).

5. Apparatus of any preceding claim, wherein the buoyancy members (52) are connected together by a connector that allows the two parts (1a, 1b) to move relative to one another.

6. Apparatus of any preceding claim, wherein each connector (53) comprises a first pivotal member (57) attached to said buoyancy member (52), and a second pivotal member (56) attached to the frame (1), the first and second pivotal members (57, 56) being pivotally connected together.

7. Apparatus of claim 6, including a variable length connector connected between the first and second pivotal members (57, 56) so as to adjust the pivot angle therebetween.

8. Apparatus of claim 6 or claim 7, wherein one of the first and second pivotal members (57, 56) has at least one slot (60) therein and the other one of the first and second pivotal members (57, 56) has a corresponding at least one pin or bolt (62) that passes through the corresponding slot (60), the pin or bolt (62) being arranged to move along the corresponding slot (60) as the pivot angle is adjusted.

9. Apparatus of claim 8, wherein a distal end of the pin or bolt (62) carries a head or nut that can be clamped against the pivotal member (57; 56) having the slot (60), so as to secure the relative pivotal position of the first and second pivotal members (57, 56).

10. Apparatus of claim 8 or claim 9, wherein the first and second pivotal members (57, 56) each have one or more respective apertures (64, 63) arranged to mutually align at predetermined pivotal angles, such that the relative pivotal positions of the first and second pivotal members (57, 56) can be secured by insertion of a pin through mutually aligned said apertures.

11. Apparatus of any preceding claim, wherein each connector (53) is remotely adjustable.

12. Apparatus of any preceding claim, wherein the buoyancy of the buoyancy members (52) is adjustable so that the overall buoyancy of the apparatus is positive when floating in water.

13. Apparatus of any preceding claim, wherein the buoyancy members (52) are elongate in a generally horizontal direction so as to stabilise the apparatus when floating in water.

## Patentansprüche

1. Vorrichtung zum Warten einer länglichen Konstruktion (30) im Wasser, die ein Gestell (1) zum Anbringen an der Konstruktion (30) umfasst und für die Wartung der Konstruktion (30) und/oder den Transport entlang der Konstruktion (30) ausgelegt ist, wobei das Gestell (1) mindestens zwei Teile (1a, 1b) umfasst, die in Bezug zueinander beweglich sind und so das Gestell (1) zum Anordnen um die Konstruktion (30) herum öffnen und schließen, wobei jedes der Teile (1a, 1b) ein entsprechendes Auftriebselement (52) aufweist, das über ein jeweiliges Verbindungsstück (53) daran angebracht ist, welches sich so verstellen lässt, dass ein Winkel einer Längsachse des Gestells (1) beim Schwimmen im Wasser in Bezug auf die Vertikale so verstellt werden kann, dass er einem Winkel der länglichen Konstruktion (30) im Wasser entspricht, an der die Vorrichtung angebracht werden soll, so dass das Gestell (1) so angeordnet ist, dass es an der Konstruktion (30) anliegt, wenn die Vorrichtung schwimmt.

2. Vorrichtung nach Anspruch 1, wobei es sich bei jedem Verbindungsstück (53) um ein Drehverbindungsstück handelt.

3. Vorrichtung nach Anspruch 2, wobei jedes Drehverbindungsstück (53) einen Drehpunkt (58) um einen Mittelpunkt oder einen Schwerpunkt des Gestells (1) aufweist.

4. Vorrichtung nach einem der vorhergehenden Ansprüche, wobei die Auftriebselemente (52) abnehmbar an den jeweiligen Teilen des Gestells (1) angebracht sind.

5. Vorrichtung nach einem der vorhergehenden Ansprüche, wobei die Auftriebselemente (52) über ein Verbindungsstück miteinander verbunden sind, das ein Bewegen der beiden Teile (1a, 1b) in Bezug zueinander ermöglicht.

6. Vorrichtung nach einem der vorhergehenden Ansprüche, wobei jedes Verbindungsstück (53) ein erstes Drehelement (57), das an dem Auftriebselement (52) angebracht ist, und ein zweites Drehelement (56) umfasst, das an dem Gestell (1) angebracht ist, wobei das erste und das zweite Drehelement (57, 56) drehbar miteinander verbunden sind.

7. Vorrichtung nach Anspruch 6, die ein Verbindungsstück von variabler Länge aufweist, das mit dem ersten und dem zweiten Drehelement (57, 56) verbunden ist und den Drehwinkel zwischen beiden verstellt.

8. Vorrichtung nach Anspruch 6 oder 7, wobei sich in dem ersten oder dem zweiten Drehelement (57, 56) mindestens ein Schlitz (60) befindet und das jeweils andere Drehelement (57, 56) mindestens einen entsprechenden Stift oder Bolzen (62) aufweist, der durch den entsprechenden Schlitz (60) verläuft, wobei der Stift oder Bolzen (62) so angeordnet ist, dass er sich beim Verstellen des Drehwinkels den entsprechenden Schlitz (60) entlang bewegt.

9. Vorrichtung nach Anspruch 8, wobei ein distales Ende des Stifts oder Bolzens (62) einen Kopf oder eine Mutter trägt, der/die an dem Drehelement (57; 56) mit dem Schlitz (60) eingespannt sein kann, so dass die relative Drehposition des ersten und des zweiten Drehelements (57, 56) fixiert wird.

10. Vorrichtung nach Anspruch 8 oder 9, wobei das erste und das zweite Drehelement (57, 56) jeweils eine oder mehrere jeweilige Öffnungen (64, 63) aufweisen, die so angeordnet sind, dass sie in vorgegebenen Drehwinkeln aufeinander ausgerichtet sind, so dass die relative Drehposition des ersten und des zweiten Drehelements (57, 56) durch Einstecken eines Stifts in die aufeinander ausgerichteten Öffnungen fixiert werden kann.

11. Vorrichtung nach einem der vorhergehenden Ansprüche, wobei sich jedes Verbindungsstück (53) aus der Ferne verstellen lässt.

12. Vorrichtung nach einem der vorhergehenden Ansprüche, wobei der Auftrieb der Auftriebselemente (52) verstellbar ist, so dass der Gesamtauftrieb der Vorrichtung, wenn sie im Wasser schwimmt, positiv ist.

13. Vorrichtung nach einem der vorhergehenden Ansprüche, wobei die Auftriebselemente (52) in allgemein horizontaler Richtung länglich sind, so dass sie die Vorrichtung stabilisieren, wenn sie im Wasser schwimmt.

## Revendications

1. Appareil d'entretien d'une structure aquatique allongée (30), comprenant un cadre (1) pour la fixation à la structure (30) et configuré pour l'entretien de la structure (30) et/ou le transport le long de la structure (30), dans lequel le cadre (1) comprend au moins deux parties (1a, 1b) mobiles l'une par rapport à l'autre de manière à ouvrir et fermer le cadre (1) pour l'agencement autour de la structure (30), chacune des parties (1a, 1b) présentant un élément de flottabilité correspondant (52) fixé à celle-ci par un raccord respectif (53) qui est réglable de sorte qu'un angle d'un axe longitudinal du cadre (1) lorsqu'il flotte dans l'eau puisse être réglé par rapport à la verticale pour correspondre à un angle de la structure aquatique allongée (30) à laquelle l'appareil doit être fixé, de sorte que le cadre (1) soit agencé pour s'adapter autour de la structure (30) pendant que l'appareil flotte.

2. Appareil selon la revendication 1, dans lequel chaque raccord (53) est un raccord pivotant.

3. Appareil selon la revendication 2, dans lequel chaque raccord pivotant (53) présente un point de pivotement (58) autour d'un point médian ou d'un centre de gravité du cadre (1).

4. Appareil selon l'une quelconque des revendications précédentes, dans lequel les éléments de flottabilité (52) sont fixés de manière amovible aux parties respectives du cadre (1).

5. Appareil selon l'une quelconque des revendications précédentes, dans lequel les éléments de flottabilité (52) sont raccordés ensemble par un raccord qui permet aux deux parties (1a, 1b) de se déplacer l'une par rapport à l'autre.

6. Appareil selon l'une quelconque des revendications précédentes, dans lequel chaque raccord (53) comprend un premier élément pivotant (57) fixé audit élément de flottabilité (52), et un second élément pivotant (56) fixé au cadre (1), les premier et second éléments pivotants (57, 56) étant raccordés ensemble de façon pivotante.

7. Appareil selon la revendication 6, comportant un raccord de longueur variable raccordé entre les premier et second éléments pivotants (57, 56) de manière à régler l'angle de pivotement entre eux.

8. Appareil selon la revendication 6 ou la revendication 7, dans lequel l'un des premier et second éléments pivotants (57, 56) présente au moins une fente (60) en son sein et l'autre des premier et second éléments pivotants (57, 56) présente au moins une goupille ou un boulon correspondant(e) (62) qui passe à travers la fente correspondante (60), la goupille ou le boulon (62) étant agencé(e) pour se déplacer le long de la fente correspondante (60) lorsque l'angle de pivotement est réglé.

9. Appareil selon la revendication 8, dans lequel une extrémité distale de la goupille ou du boulon (62) porte une tête ou un écrou qui peut être serré(e) contre l'élément pivotant (57 ; 56) présentant la fente (60), de manière à fixer la position de pivotement relative des premier et second éléments pivotants (57, 56).

10. Appareil selon la revendication 8 ou la revendication 9, dans lequel les premier et second éléments pivotants (57, 56) présentent chacun une ou plusieurs ouvertures relatives (64, 63) agencées pour s'aligner mutuellement selon des angles de pivotement prédéterminés, de sorte que les positions de pivotement relatives des premier et second éléments pivotants (57, 56) puissent être fixées par l'insertion d'une goupille à travers lesdites ouvertures mutuellement alignées.

11. Appareil selon l'une quelconque des revendications précédentes, dans lequel chaque raccord (53) est réglable à distance.

12. Appareil selon l'une quelconque des revendications précédentes, dans lequel la flottabilité des éléments de flottabilité (52) est réglable de sorte que la flottabilité totale de l'appareil soit positive lorsqu'il flotte dans l'eau.

13. Appareil selon l'une quelconque des revendications précédentes, dans lequel les éléments de flottabilité (52) sont allongés dans une direction généralement horizontale de manière à stabiliser l'appareil lorsqu'il flotte dans l'eau.
